# FASCICULE DE BREVET EUROPEEN

(11) **EP 0 341 137 B1**
(45) Date de publication et mention de la délivrance du brevet: **03.02.1993**
(21) Numéro de dépôt: 89401201.2
(22) Date de dépôt: 27.04.1989
(51) Int. Cl.: F16C 17/20

(54) **Dispositif à palier magnétique et palier auxiliaire pour arbre tournant**
Anordnung eines Magnetlagers und eines Notlagers für eine Welle
Arrangement comprising an emergency bearing and a magnetic bearing for a rotary axle

(30) Priorité: 29.04.1988 FR 8805818
(43) Date de publication de la demande: 08.11.1989
(73) Titulaire: SOCIETE DE MECANIQUE MAGNETIQUE S.A., F-27950 Saint-Marcel (FR)
(72) Inventeur: Jolivet, Jean, F-27620 Gasny (FR); Habermann, Helmut, F-27200 Vernon (FR)
(74) Mandataire: Thévenet, Jean-Bruno

(56) Documents cités:
- DE-A- 1 575 651
- DE-A- 1 675 105
- DE-A- 2 336 488
- DE-A- 2 933 942
- DE-C- 1 070 452
- US-A- 2 086 787
- US-A- 3 411 706
- US-A- 4 063 786
- US-A- 4 180 946

## Description

La présente invention a pour objet un dispositif comportant un palier principal magnétique et un palier auxiliaire pour un arbre tournant monté à l'intérieur d'un bâti.

Dans la plupart des applications dans lesquelles un arbre tournant est suspendu à l'aide d'une suspension magnétique active asservie à partir de capteurs de la position de l'arbre tournant, des paliers auxiliaires, encore dénommés paliers de secours, qui se présentent généralement sous la forme de roulements à billes ou à rouleaux, sont prévus pour supporter l'arbre pendant l'arrêt de la machine ou en cas d'incident de la suspension magnétique, afin d'éviter un contact entre les armatures rotoriques et les stators des paliers magnétiques lorsque les enroulements des électro-aimants de stator ne sont pas alimentés en courant, et ainsi éviter une détérioration des tôles. Les paliers auxiliaires présentent un jeu avec l'arbre tournant et ne sont pas en rotation en fonctionnement normal. Le jeu des paliers auxiliaires est généralement de l'ordre de la moitié de l'entrefer des paliers magnétiques. Un exemple de suspension magnétique active d'un arbre tournant associée à des paliers auxiliaires du type roulements à billes est décrite dans le document US-A-4 180 946.

Les roulements de secours classiques utilisés en cas de panne de la suspension magnétique peuvent être montés soit sur l'arbre tournant, avec un jeu ménagé entre la bague extérieure et le stator, soit sur le bâti avec un jeu ménagé entre la bague interne et le rotor. Dans un cas comme dans l'autre, lors de l'atterrissage de la partie tournante sur la partie fixe du roulement, le mouvement n'est pas toujours stable et il se produit des contraintes très fortes sur les cages ou les éléments de roulement du palier de secours qui sont alors souvent endommagés. Il s'ensuit que les paliers de secours doivent faire l'objet de fréquents remplacements, ce qui augmente le coût de la maintenance.

On connaît par ailleurs, par le document DE-A-2 336 488, un dispositif de support axial d'un arbre de pompe rotative, comprenant un palier magnétique axial composé d'électro-aimants disposés en regard d'une armature solidaire de l'arbre tournant, et un palier lisse de secours comportant, selon l'un des modes de réalisation envisagés, un rotor monté sur l'arbre tournant et un stator monté sur le bâti et présentant, par rapport au rotor, un jeu inférieur à l'entrefer du palier magnétique axial. Des canaux radiaux sont prévus dans l'armature tournante du palier axial pour permettre au fluide de travail de la pompe d'assurer en permanence un refroidissement du palier magnétique et une lubrification du palier de secours. Un tel agencement, qui n'est applicable qu'à des pompes ou dispositifs utilisant un fluide de travail, n'est pas universel et implique une consommation de fluide non négligeable.

La présente invention vise à remédier aux inconvénients précités et à réaliser un palier auxiliaire pour arbre tournant monté sur paliers magnétiques qui permette, lors d'une défaillance ou d'un arrêt de la suspension magnétique, de recevoir l'arbre tournant sans que des perturbations sensibles soient introduites dans le mouvement de l'arbre lors de son atterrissage et sans que le palier auxiliaire soit soumis à une usure ou une destruction rapides.

L'invention vise encore à réaliser un palier auxiliaire universel dont la structure est simple et le montage est facile à réaliser.

Ces buts sont atteints grâce à un dispositif comportant un palier principal magnétique et un palier auxiliaire pour un arbre tournant monté à l'intérieur d'un bâti, le palier auxiliaire comprenant un rotor monté sur l'arbre tournant, un stator monté sur le bâti et disposé en regard du rotor en ménageant un jeu, dont l'épaisseur est inférieure à l'entrefer dudit palier magnétique constituant un support principal de l'arbre tournant, et un réseau de canaux étant prévu pour l'alimentation d'un liquide dans l'espace libre ménagé entre le rotor et le stator. Un tel dispositif est connu du document DE-A-2 336 488. Selon l'invention ce dispositif est caractérisé en ce que ledit stator du palier auxiliaire est en graphite et ledit rotor du palier auxiliaire est en acier chromé, en ce que les canaux d'alimentation en liquide traversent le stator et débouchent directement dans ledit espace libre ménagé entre le rotor et le stator et en ce que le dispositif comprend en outre des moyens de commande sélective de l'approvisionnement en liquide à travers ledit réseau de canaux d'alimentation.

Selon un premier mode de réalisation possible, le palier auxiliaire est de type à jeu radial et comprend un rotor en forme de douille en acier chromé montée sur un tronçon de l'arbre tournant et un stator composé d'au moins une bague en graphite concentrique au rotor, et les canaux d'alimentation en liquide débouchent radialement dans l'espace libre du palier auxiliaire constituant le jeu en plusieurs zones réparties sur le pourtour de la bague.

A titre d'exemple, le stator comprend au moins trois bagues en graphite juxtaposées dans le sens axial et montées concentriquement par rapport au rotor et les canaux d'alimentation en liquide débouchent dans l'espace libre par des interstices ménagés entre les différentes bagues du stator.

Selon une caractéristique particulière, des gorges de récupération du liquide de lubrification sont formées de part et d'autre du stator dans le bâti au voisinage des extrémités du rotor en forme de douille.

Selon un autre mode de réalisation possible, le palier auxiliaire est de type à jeu axial et comprend un rotor constitué par un disque plan en acier chromé perpendiculaire à l'arbre tournant et monté sur ce dernier et un stator composé d'au moins trois coussinets plans en graphite montés sur le bâti face au disque plan du rotor dans un même plan perpendiculaire à l'arbre tournant et les canaux d'alimentation en liquide débouchent axialement dans l'espace libre du palier auxiliaire en plusieurs zones réparties autour de l'axe du rotor et situées à proximité immédiate des coussinets plans du côté le plus proche de l'axe du rotor.

Selon une caractéristique particulière, les moyens de commande sélective de l'approvisionnement en liquide à travers le réseau de canaux d'alimentation sont munis de dispositifs réagissant à l'arrêt de l'alimentation des paliers magnétiques pour déclencher l'approvisionnement en liquide.

Selon une variante de réalisation, ou à titre complémentaire, les moyens de commande sélective de l'approvisionnement en liquide à travers le réseau de canaux d'alimentation sont munis de détecteurs de température disposés au voisinage du stator en graphite pour détecter la température de celui-ci et déclencher l'approvisionnement en liquide lorsque le stator atteint un échauffement prédéterminé.

Dans le cas où l'on souhaite que l'arbre tournant continue sa rotation à vitesse réduite après atterrissage sur des paliers auxiliaires selon l'invention, et afin de réduire la quantité de liquide nécessaire, il est prévu des moyens de récupération du liquide injecté dans l'espace libre du palier auxiliaire et une pompe de recirculation du liquide récupéré pour assurer une réinjection dans une réserve ou directement dans le réseau de canaux d'alimentation.

D'autres caractéristiques et avantages de l'invention ressortiront de la description suivante de modes particuliers de réalisation, donnés à titre d'exemples, en référence aux dessins annexés, sur lesquels :
- la figure 1 est une vue en coupe axiale d'un exemple de palier auxiliaire selon l'invention à jeu radial,
- la figure 2 est une vue en coupe axiale, selon le plan II-II de la figure 3, d'un exemple de palier auxiliaire selon l'invention à jeu axial, et
- la figure 3 est une vue en coupe selon le plan III-III de la figure 2, montrant une vue frontale du stator du palier auxiliaire de la figure 2.

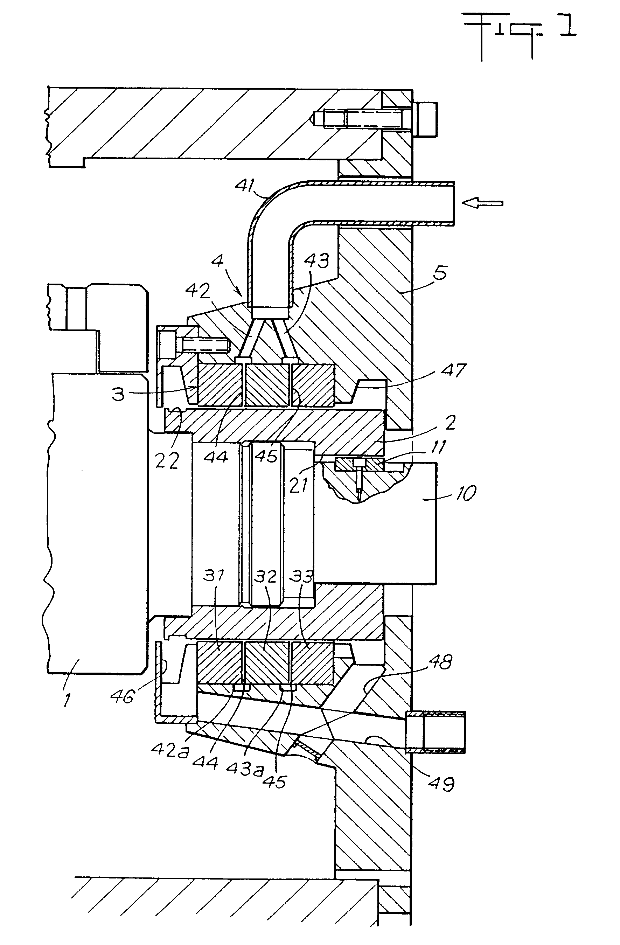

On a représenté sur la figure 1 un palier auxiliaire à jeu radial disposé autour d'une portion 10 d'un arbre tournant 1 monté à l'aide de paliers magnétiques actifs classiques, non représentés, à l'intérieur d'un bâti 5. Sur la figure 1, le palier auxiliaire est monté sur une portion d'extrémité 10 de l'arbre tournant 1 qui présente une section réduite.

Le palier auxiliaire selon l'invention comprend un rotor 2 en acier chromé constitué par une douille montée sur l'extrémité 10 de section réduite de l'arbre tournant 1 et immobilisée en rotation par au moins un élément 11 formant clavette qui est fixé sur l'extrémité 10 de l'arbre tournant et coopère avec une rainure 21 formée sur la partie interne de la douille 2.

Un stator 3 en graphite, solidaire du bâti 5 est composé de trois bagues 31, 32, 33 en graphite qui sont juxtaposées dans le sens axial de l'arbre 1 et entourent le rotor 2 en ménageant un jeu radial, qui peut être par exemple de l'ordre du dixième de millimètre mais est dans tous les cas avantageusement de l'ordre de la moitié de l'entrefer des paliers magnétiques radiaux.

Un réseau 4 de canaux d'alimentation en eau de lubrification est agencé dans le bâti 5 et se termine par des canaux 44, 45 débouchant dans l'espace libre constituant le jeu entre le rotor 2 et le stator 3. Les canaux 44, 45 débouchent radialement dans l'espace libre annulaire formant le jeu du palier auxiliaire et sont répartis tout autour du rotor 2. Les canaux 44, qui peuvent être au nombre de 4 à 8 par exemple sont formés entre les bagues adjacentes 31 et 32 tandis que les canaux 45, qui peuvent être également au nombre de 4 à 8 sont formés entre les bagues adjacentes 32 et 33.

Les canaux 44, 45 peuvent être alimentés par des gorges circulaires 42a, 43a situées autour du stator 3 au niveau des jonctions entre les bagues 31, 32 d'une part et 32, 33 d'autre part. Les gorges circulaires 42a, 43a sont elles-mêmes approvisionnées par deux branches secondaires 42, 43 d'une conduite principale 41 d'alimentation en eau située au-dessus du palier auxiliaire.

Il est avantageux que des gorges 46, 47 de récupération du liquide de lubrification soient formées dans le bâti 5 de part et d'autre du stator 3 au voisinage des extrémités du rotor 2 en forme de douille. Le rotor 2 peut lui-même comporter une gorge 22 à l'une ou l'autre de ses extrémités pour empêcher un écoulement axial du liquide de lubrification au-delà du palier auxiliaire et renvoyer l'eau vers les gorges 46, 47 de récupération de liquide lubrifiant. Des conduits 48, 49 sont formés dans le bâti en-dessous du palier auxiliaire.

Le conduit principal 41 d'approvisionnement en eau et, le cas échéant, le conduit principal 49 d'évacuation en eau sont raccordés à un réservoir d'eau sous pression non représenté, qui peut contenir une quantité d'eau pouvant être par exemple de 5 à 15 litres.

Le palier auxiliaire qui vient d'être décrit est destiné à fonctionner en palier atterrisseur en cas de défaillance de la suspension magnétique. Le rotor lisse 2 en acier chromé vient porter sur la surface interne également lisse des bagues 31, 32, 33 en graphite lorsque l'arbre tournant n'est plus suspendu normalement par des paliers magnétiques. En l'absence d'autre mesure particulière, il s'ensuit un échauffement du palier auxiliaire par suite des frottements entre le rotor 2 et le stator 3. Ceci pourrait conduire à un endommagement ou une destruction du palier auxiliaire. Toutefois, grâce à l'injection d'eau qui, par centrifugation, se répartit dans tout l'espace libre entre le rotor 2 et le stator 3, le coefficient de frottement entre les pièces en graphite et le rotor en acier chromé est très faible, tant que les vitesses de rotation restent supérieures à quelques tours par seconde. Ainsi, grâce à l'injection d'eau au niveau du palier auxiliaire lorsque celui-ci entre en service, les frottements sont très réduits tant que le rotor tourne encore à une vitesse supérieure à quelques tours par seconde de sorte que le palier auxiliaire ne risque pas d'être endommagé. Lorsque la vitesse de rotation atteint quelques tours par seconde, c'est-à-dire est devenue très faible, le coefficient de frottement augmente fortement et le palier auxiliaire assure l'arrêt de la rotation de l'arbre sans être endommagé compte tenu du faible niveau de vitesse atteint.

Des moyens de commande sélective de l'approvisionnement en liquide par la conduite principale d'arrivée 41 à partir du réservoir de liquide sous pression sont prévus pour réagir à l'arrêt de l'alimentation des paliers magnétiques et commander le déclenchement de l'approvisionnement en liquide à travers le réseau 4 dès que le palier auxiliaire est amené à entrer en service par suite de la défaillance ou de l'arrêt de la suspension magnétique. L'eau de lubrification injectée dès que le rotor 2 du palier auxiliaire vient en contact avec le stator 3 en graphite permet d'abaisser fortement le coefficient de frottement et par là-même d'empêcher une usure ou un endommagement du rotor 2 et du stator 3 du palier auxiliaire.

A titre de variante, il est possible de ne pas injecter l'eau de lubrification dès l'arrêt de l'alimentation des paliers magnétiques de support de l'arbre tournant, mais au contraire de n'injecter l'eau de lubrification dans le réseau 4 qu'avec un certain retard à partir de la défaillance de la suspension magnétique, le retard correspondant à une période de temps pendant laquelle l'échauffement du palier auxiliaire qui se produit à cause du fort coefficient de frottement conduit à une augmentation de la température qui n'affecte pas l'intégrité des éléments constitutifs du palier. Il est alors possible de commander l'injection d'eau à partir des informations délivrées par un capteur de température placé au voisinage du stator en graphite 3. Lorsque le ou les capteurs de température détectent un échauffement atteignant un seuil prédéterminé au-delà duquel l'intégrité du palier auxiliaire risquerait d'être affectée, les moyens de commande d'injection d'eau autorisent l'injection de l'eau stockée dans le réservoir.

Les capteurs de température peuvent aussi être utilisés comme moyens de détection de sécurité assurant une redondance avec les moyens de détection d'un défaut d'alimentation des paliers magnétiques. Dans ce cas, l'injection d'eau est normalement déclenchée dès l'arrêt de l'alimentation des paliers magnétiques, mais en cas de mauvais fonctionnement du dispositif de détection de l'arrêt de l'alimentation des paliers magnétiques, le ou les capteurs de température permettent de déclencher l'injection d'eau avant que se soit produit un endommagement du palier auxiliaire.

Pour une machine tournante ayant un arbre tournant de plusieurs tonnes, et tournant à vitesse normale à quelques milliers de tours par minute, quelques litres d'eau par minute et par palier suffisent pour une bonne lubrification. Une fois déclenchée la mise en service des paliers auxiliaires radiaux et l'injection d'eau après arrêt ou défaillance de la suspension magnétique active, l'entraînement de l'arbre tournant de la machine est interrompu et l'arrêt de l'arbre tournant peut s'effectuer au bout d'une durée de l'ordre de 2 à 3 minutes. La quantité d'eau de lubrification nécessaire peut être dans ce cas de l'ordre de 5 litres par minute.

Dans certaines applications particulières, il est nécessaire de poursuivre la rotation de l'arbre tournant à vitesse réduite pendant une durée qui peut être par exemple de l'ordre de 30 minutes, après l'entrée en service des paliers auxiliaires. Dans ce cas, afin de limiter la quantité d'eau devant être stockée dans le réservoir, il est avantageux de récupérer l'eau de lubrification s'écoulant par le conduit 49 et de la mettre en recirculation, à l'aide d'une pompe soit dans le réservoir, soit directement à l'entrée du conduit principal 41.

Les moyens de commande sélective de l'approvisionnement en liquide à travers du réseau 4 de canaux d'alimentation à partir du réservoir peuvent agir sur une vanne par exemple du type javelot disposée entre le réservoir et le conduit principal d'alimentation 41.

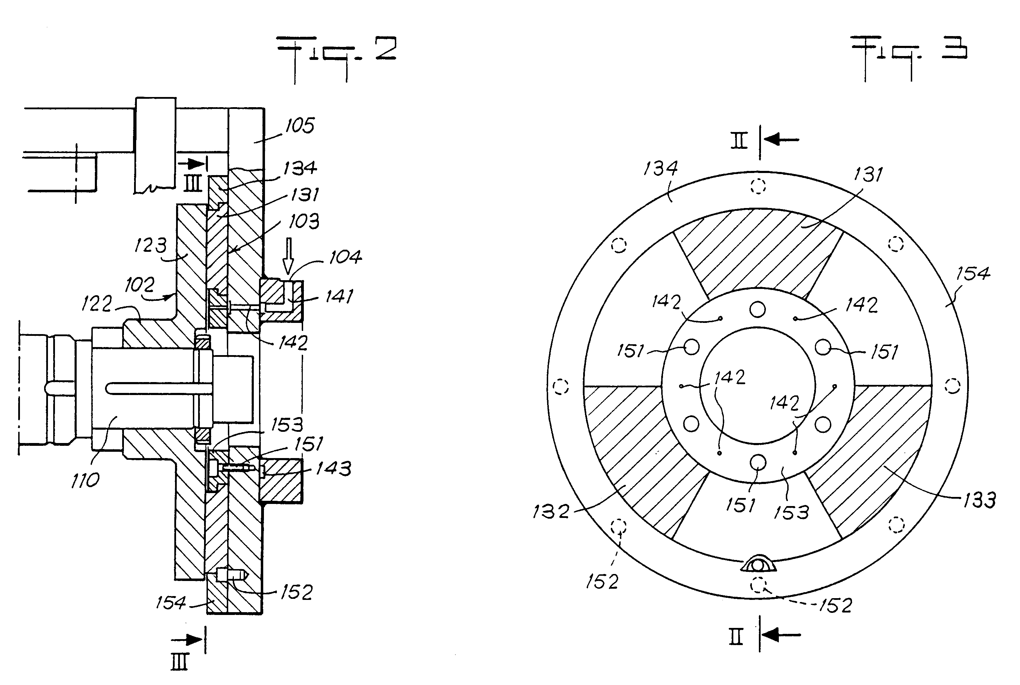

L'invention s'applique également à un palier auxiliaire à jeu axial. Les figures 2 et 3 représentent un tel palier auxiliaire dont la structure et la fonction sont similaires à ceux du palier auxiliaire à jeu radial de la figure 1, mais dont la configuration est naturellement différente.

Le palier auxiliaire des figures 2 et 3 comprend un rotor 102 composé essentiellement d'un disque plan 123 en acier chromé disposé perpendiculairement à l'arbre tournant 110, muni d'une ouverture centrale et monté sur l'arbre tournant à l'aide d'une partie cylindrique 122 formant manchon solidaire du disque plan 123. Un stator 103 monté sur le bâti 105 à l'aide d'éléments de liaison 151, 152, et situés dans un même plan perpendiculaire à l'arbre 110.

On voit sur les figures 2 et 3 que les coussinets plans 131, 132, 133 en graphite présentent la forme de secteurs angulaires maintenus en position entre une première bague interne 153 et une deuxième bague externe 154 en acier elles-mêmes fixées par les éléments de liaison 151, 152 sur une plaque de fond solidaire du bâti 105. Les coussinets 131, 132, 133 se projettent légèrement en avant par rapport aux bagues 153, 154 en direction du disque rotorique 123.

Le réseau 104 d'alimentation en eau comprend un canal principal 141 d'amenée d'eau qui débouche dans une gorge annulaire 143 dans laquelle prennent naissance plusieurs canaux (six sur l'exemple de la figure 3) parallèles à l'axe de l'arbre 110, régulièrement répartis autour de l'axe de l'arbre 110 et débouchant dans l'espace libre situé au voisinage de la partie interne des coussinets en graphite 131, 132, 133, afin de permettre, par centrifugation une répartition de l'eau de lubrification sur toute la surface des coussinets 131, 132, 133.

L'alimentation en eau du réseau 104 de canalisations 141, 142, 143 d'alimentation peut s'effectuer d'une façon tout à fait similaire à ce qui a été décrit en référence au mode de réalisation de la figure 1, à partir d'un réservoir de stockage. La commande sélective d'alimentation en eau peut également être tout à fait semblable à ce qui a déjà été indiqué plus haut.

## Revendications

1. Dispositif comportant un palier principal magnétique et un palier auxiliaire pour un arbre tournant (1; 110),monté à l'intérieur d'un bâti (5; 105), le palier auxiliaire comprenant un rotor(2; 102) monté sur l'arbre tournant (1; 110), un stator (3; 103) monté sur le bâti(5; 105) et disposé en regard du rotor (2; 102) en ménageant un jeu, dont l'épaisseur est inférieure à l'entrefer dudit palier magnétique constituant un support principal de l'arbre tournant (1; 110), et un réseau(4; 104) de canaux étant prévu pour l'alimentation d'un liquide dans l'espace libre ménagé entre le rotor (2; 102) et le stator (3; 103),
caractérisé en ce que ledit stator (3; 103) du palier auxiliaire est en graphite et ledit rotor (2; 102) du palier auxiliaire est en acier chromé, en ce que les canaux d'alimentation en liquide traversent le stator(3; 103) et débouchent directement dans ledit espace libre ménagé entre le rotor (2; 102) et le stator(3; 103) et en ce que le dispositif comprend en outre des moyens de commande sélective de l'approvisionnement en liquide à travers ledit réseau (4; 104) de canaux d'alimentation.

2. Dispositif selon la revendication 1, caractérisé en ce qu'il est de type à jeu radial, en ce que le palier auxiliaire comprend un rotor (2) en forme de douille en acier chromé montée sur un tronçon (10) de l'arbre tournant (1) et un stator (3) composé d'au moins une bague (31,32,33) en graphite concentrique au rotor (2), et en ce que les canaux d'alimentation en liquide (42,43,44,45) débouchent radialement dans l'espace libre du palier auxiliaire constituant le jeu en plusieurs zones réparties sur le pourtour de la bague (31,32,33).

3. Dispositif selon la revendication 2, caractérisé en ce que le stator (3) comprend au moins trois bagues (31,32,33) en graphite juxtaposées dans le sens axial et montées concentriquement par rapport au rotor (2) et en ce que les canaux d'alimentation en liquide (44, 45) débouchent dans l'espace libre par des interstices ménagés entre les différentes bagues (31,32,33) du stator (3).

4. Dispositif selon la revendication 2 ou la revendication 3, caractérisé en ce que des gorges (46,47) de récupération du liquide de lubrification sont formées de part et d'autre du stator (3) dans le bâti (5) au voisinage des extrémités du rotor (2) en forme de douille.

5. Dispositif selon la revendication 1, caractérisé en ce qu'il est de type à jeu axial en ce que le palier auxiliaire comprend un rotor (102) constitué par un disque plan (123) en acier chromé perpendiculaire à l'arbre tournant (110) et monté sur ce dernier et un stator (103) composé d'au moins trois coussinets plans (131, 132, 133) en graphite montés sur le bâti (105) face au disque plan (123) du rotor (102) dans un même plan perpendiculaire à l'arbre tournant (110) et en ce que les canaux d'alimentation en liquide (142) débouchent axialement dans l'espace libre du palier auxiliaire en plusieurs zones réparties autour de l'axe du rotor et situées à proximité immédiate des coussinets plans (131, 132, 133) du côté le plus proche de l'axe du rotor (102).

6. Dispositif selon l'une quelconque des revendications 1 à 5, caractérisé en ce que les moyens de commande sélective de l'approvisionnement en liquide à travers le réseau (4;104) de canaux d'alimentation sont munis de dispositifs réagissant à l'arrêt de l'alimentation des paliers magnétiques pour déclencher l'approvisionnement en liquide.

7. Dispositif selon l'une quelconque des revendications 1 à 6, caractérisé en ce que les moyens de commande sélective de l'approvisionnement en liquide à travers le réseau (4; 104) de canaux d'alimentation sont munis de détecteurs de température disposés au voisinage du stator (3;103) en graphite pour détecter la température de celui-ci et déclencher l'approvisionnement en liquide lorsque le stator (3;103) atteint un échauffement prédéterminé.

8. Dispositif selon l'une quelconque des revendications 1 à 7, caractérisé en ce que le liquide de lubrification est de l'eau.

9. Dispositif selon l'une quelconque des revendications 1 à 8, caractérisé en ce qu'il comprend une réserve de quelques litres de liquide sous pression disposée sur le bâti (5;105).

10. Dispositif selon l'une quelconque des revendications 1 à 9, caractérisé en ce qu'il comprend des moyens de récupération du liquide injecté dans l'espace libre du palier auxiliaire et une pompe de recirculation du liquide récupéré pour assurer une réinjection dans une réserve ou directement dans le réseau (4;104) de canaux d'alimentation.

11. Dispositif selon l'une quelconque des revendications 1 à 10, caractérisé en ce qu'il comprend un réservoir de liquide sous pression disposé sur le bâti (5;105) et une vanne de type javelot est actionnée par lesdits moyens de commande sélective pour provoquer l'approvisionnement en liquide à travers le réseau (4;104) de canaux d'alimentation à partir dudit réservoir.

12. Dispositif selon l'une quelconque des revendications 1 à 11, caractérisé en ce que le palier auxiliaire présente un jeu entre le rotor (2;102) et le stator (3;103) dont l'épaisseur est de l'ordre du dixième de millimètre.

## Patentansprüche

1. Vorrichtung umfassend ein Magnethauptlager und ein Notlager für eine Drehwelle (1; 110), die innerhalb eines Gestells (5; 105) montiert ist, wobei das Notlager einen Rotor (2; 102) aufweist, der auf die Drehwelle (1; 110) montiert ist, des weiteren einen an das Gestell (5; 105) montierten Stator (3; 103), der unter Wahrung eines Spiels gegenüber dem Rotor (2; 102) angeordnet ist, und dessen Stärke geringer ist als der Luftspalt des genannten Magnetlagers, das das Hauptlager der Drehwelle (1; 110) darstellt, sowie ein Leitungsnetz (4; 104) zur Versorgung des zwischen Rotor (2; 102) und Stator (3; 103) gelassenen freien Raums mit einer Flüssigkeit,
dadurch gekennzeichnet, daß der genannte Stator (3; 103) des Notlagers aus Graphit und der genannte Rotor (2; 102) aus Chromstahl besteht, und daß die Leitungen zur Versorgung mit Flüssigkeit durch den Stator (3; 103) gehen und direkt in den besagten Feiraum zwischen Rotor (2; 102) und Stator (3; 103) münden, sowie dadurch, daß die Vorrichtung außerdem Selektivsteuervorrichtungen für die Einspeisung von Flüssigkeit in Versorgungsleitungen über das genannte Netz (4; 104) aufweist.

2. Vorrichtung gemäß Anspruch 1, dadurch gekennzeichnet, daß sie eine Vorrichtung des Typs mit Radialspiel ist, und daß das Notlager über einen Rotor (2) in Form einer Hülse aus Chromstahl verfügt, der auf ein Teilstück (10) der Drehwelle (1) montiert ist, sowie über einen Stator (3), der aus mindestens einem, zum Rotor (2) konzentrischen Graphitring (31, 32, 33) besteht, sowie dadurch, daß die Versorgungsleitungen mit Flüssigkeit (42, 43, 44, 45) radial in den Freiraum des Notlagers einmünden, der in mehreren, um den Ring (31, 32, 33) verteilten Zonen das Spiel darstellt.

3. Vorrichtung gemäß Anspruch 2, dadurch gekennzeichnet, daß der Stator (3) mindestens drei Graphitringe (31, 32, 33) aufweist, die in Axialrichtung nebeneinanderliegen und gegenüber dem Rotor (2) konzentrisch montiert sind, sowie dadurch, daß die Flüssigkeitsversorgungsleitungen (44,45) über Spalten in den Freiraum einmünden, die zwischen den verschiedenen Ringe (31, 32, 33) des Stators (3) gelassen sind.

4. Vorrichtung gemäß Anspruch 2 oder 3, dadurch gekennzeichnet, daß die Vertiefungen (46, 47) für das Auffangen der Schmierflüssigkeit beidseits des Rotors (3) im Gestell (5) nahe der Enden des hülsenförmigen Rotors (2) liegen.

5. Vorrichtung gemäß Anspruch 1, dadurch gekennzeichnet, daß sie eine Vorrichtung des Typs mit Axialspiel ist, daß das Notlager einen Rotor (102) aus einer flachen Chromstahlscheibe (123) aufweist, die senkrecht zur Drehwelle (110) verläuft und auf letztere montiert ist, sowie einen Stator (103) aus mindestens drei flachen Graphitlagern (131, 132, 133), die am Gestell (105) gegenüber der flachen Scheibe (123) des Rotors (102) in einer gleichen senkrechten Ebene zur Drehwelle (110) montiert sind, sowie dadurch, daß die Leitungen (142) zur Versorgung mit Flüssigkeit axial in den Freiraum des Notlagers in mehreren, um die Achse des Rotors verteilten und in unmittelbarer Nähe zu den flachen Lagern (131, 132, 133) gelegenen Bereichen auf der der Achse des Rotor (102) nächstgelegenen Seite einmünden.

6. Vorrichtung gemäß einem der Ansprüche 1 bis 5, dadurch gekennzeichnet, daß die Selektivsteuervorrichtungen der Flüssigkeitsversorgung über das Leitungsnetz (4; 104) über Vorrichtungen verfügen, die auf die Unterbrechung der Versorgung der Magnetlager reagieren und die Versorgung mit Flüssigkeit auslösen.

7. Vorrichtung gemäß einem der Ansprüche 1 bis 6, dadurch gekennzeichnet, daß die Selektivsteuervorrichtungen der Flüssigkeitsversorgung über das Leitungsnetz (4; 104) mit Temperaturfühlern ausgestattet sind, die in der Nähe des Graphitstators (3; 103) angeordnet sind, um dessen Temperatur zu messen und die Versorgung mit Flüssigkeit auszulösen, wenn der Stator (3; 103) sich auf eine vorher festgelegte Temperatur erwärmt.

8. Vorrichtung gemäß einem der Ansprüche 1 bis 7, dadurch gekennzeichnet, daß die Schmierflüssigkeit Wasser ist.

9. Vorrichtung gemäß einem der Ansprüche 1 bis 8, dadurch gekennzeichnet, daß sie über einen Vorrat aus einigen Litern Druckflüssigkeit verfügt, der am Gestell (5; 105) vorgesehen ist.

10. Vorrichtung gemäß einem der Ansprüche 1 bis 9, dadurch gekennzeichnet, daß sie Vorrichtungen zum Auffangen der im Freiraum des Notlagers zerstäubten Flüssigkeit sowie eine Umwälzpumpe für die aufgefangene Flüssigkeit aufweist, die diese wieder in einen Vorratsbehälter zurückführt oder in das Versorgungsleitungsnetz (4; 104) einspeist.

11. Vorrichtung gemäß einem der Ansprüche 1 bis 10, dadurch gekennzeichnet, daß sie am Gestell (5; 105) einen Tank für eine unter Druck stehende Flüssigkeit sowie ein Ventil vom Typ "Javelot" aufweist, das von den genannten Selektivsteuervorrichtungen betätigt wird, um die Flüssigkeitsversorgung über das Leitungsnetz (4; 104) vom besagten Tank aus auszulösen.

12. Vorrichtung gemäß einem der Ansprüche 1 bis 11, dadurch gekennzeichnet, daß das Notlager ein Spiel aufweist zwischen dem Rotor (2; 102) und dem Stator (3; 103), der etwa einen Zehntelmillimeter stark ist.

## Claims

1. Device comprising a main magnetic bearing and an auxiliary bearing for a rotary shaft (1; 110), mounted inside a frame (5; 105), the auxiliary bearing comprising a rotor (2; 102) mounted on the rotary shaft (1; 110), a stator (3; 103) mounted on the frame (5; 105) and disposed facing the rotor (2; 102) providing clearance whose thickness is smaller than the air gap in said magnetic bearing constituting a main support of the rotary shaft (1; 110), and a network (4; 104) of channels being provided for feeding a liquid into the empty space provided between the rotor (2; 102) and the stator (3; 103),
characterized in that said stator (3; 103) of the auxiliary bearing is made of graphite and said rotor (2; 102) of the auxiliary bearing is made of chromium steel, in that the liquid feed channels traverse the stator (3; 103) and open out directly into said empty space provided between the rotor (2; 102) and the stator (3; 103) and in that the device further comprises selective control means for controlling the feed of liquid through said network (4; 104) of feed channels.

2. Device according to claim 1, characterized in that it is of the type having radial clearance, and in that the auxiliary bearing comprises a rotor (2) in the form of a chromium steel sleeve mounted on a length (10) of the rotary shaft (1), and a stator (3) constituted by at least one ring (31, 32, 33) of graphite disposed concentrically about the rotor (2), and in that the liquid feed channels (42, 43, 44, 45) opening out radially into the empty space of the auxiliary bearing constituting the clearance in a plurality of zones distributed around the ring (31, 32, 33).

3. Device according to claim 2, characterized in that the stator (3) comprises at least three graphite rings (31, 32, 33) juxtaposed in the axial direction and mounted concentrically about the rotor (2), and in that the liquid feed channels (44, 45) open out into the empty space via interstices provided between the various rings (31, 32, 33) of the stator (3).

4. Device according to claim 2 or claim 3, characterized in that lubrifying liquid recovery grooves (46, 47) are formed on either side of the stator (3) in the frame (5) close to the ends of the sleeve-shaped rotor (2).

5. Device according to claim 1, characterized in that it is of the axial clearance type, in that the auxiliary bearing comprises a rotor (102) constituted by a plane disk (123) of chromium steel extending perpendicularly to the rotary shaft (110) and mounted thereon, and a stator (103) comprising at least three plane bearing surfaces (131, 132, 133) made of graphite mounted on the frame (105) and facing the plane disk (123) of the rotor (102) in a common plane perpendicular to the rotary shaft (110), and in that the liquid feed channels (142) open out axially into the empty space of the auxiliary bearing in a plurality of zones distributed around the axis of the rotor and situated in the immediate proximity of those sides of the plane bearing surfaces (131, 132, 133) which are closest to the axis of the rotor (102).

6. Device according to any one of claims 1 to 5, characterized in that the selective control means for controlling the feed of liquid through the network (4; 104) of feed channels are provided with devices which respond to the loss of power to the magnetic bearings in order to switch on the feed of liquid.

7. Device according to any one of claims 1 to 6, characterized in that the selective control means for controlling the feed of liquid through the network (4; 104) of feed channels are provided with temperature detectors disposed in the vicinity of the graphite stator (3; 103) in order to detect the temperature thereof and to switch on the feed of liquid when the stator (3; 103) rises to a predetermined temperature.

8. Device according to any one of claims 1 to 7, characterized in that the lubricating liquid is water.

9. Device according to any one of claims 1 to 8, characterized in that it includes a supply of several liters of liquid under pressure, disposed on the frame (5; 105).

10. Device according to any one of claims 1 to 9, characterized in that it includes means for recovering the liquid injected into the empty space in the auxiliary bearing and a pump for recirculating the recovered liquid in order to reinject it into a supply or directly into the network (4; 104) of feed channels.

11. Device according to any one of claims 1 to 10, characterized in that it includes a tank of liquid under pressure disposed on the frame (5; 105) and a membrane-bursting type of valve which is actuated by said selective control means in order to cause the liquid to be fed into the network (4; 104) of feed channels from said tank.

12. Device according to any one of claims 1 to 11, characterized in that the clearance between the rotor (2, 102) and the stator (3; 103) of the auxiliary bearing is about one-tenth of a millimeter.
